# EUROPÄISCHE PATENTSCHRIFT

(11) **EP 0 793 819 B1**
(45) Veröffentlichungstag und Bekanntmachung des Hinweises auf die Patenterteilung: **13.06.2001**
(21) Anmeldenummer: 95932623.2
(22) Anmeldetag: 26.09.1995
(51) Int. Cl.: G05B 19/042

(54) **VERFAHREN ZUR SPRACHSTEUERUNG VON ANLAGEN UND GERÄTEN**
METHOD FOR THE VOICE ACTUATION OF SYSTEMS AND APPARATUS
PROCEDE DE COMMANDE VOCALE D'INSTALLATIONS ET D'APPAREILS

(43) Veröffentlichungstag der Anmeldung: 10.09.1997
(73) Patentinhaber: Blaupunkt-Werke GmbH, 31132 Hildesheim (DE)
(72) Erfinder: LAUKE, Volker, D-31249 Hohenhameln (DE)
(86) Internationale Anmeldenummer: DE9501328
(87) Internationale Veröffentlichungsnummer: WO9712302

(56) Entgegenhaltungen:
- WO-A-94/03020
- US-A- 4 827 520

## Beschreibung

Die Erfindung betrifft ein Verfahren zur Sprachsteuerung von Anlagen und Geräten mit Hilfe von den Betrieb der Anlage oder des Gerätes beeinflussenden Befehlen.

Zur Steuerung von Anlagen und Geräten werden in zunehmendem Maße Spracheingaben verwendet, wobei über ein Mikrofon aufgenommene Befehle des Benutzers mit Hilfe von Spracherkennungsverfahren erkannt werden. Hierbei wird zwischen sprecherabhängigen und sprecherunabhängigen Spracherkennungsverfahren unterschieden, wobei die sprecherabhängige Spracherkennung einen begrenzten, festen Befehlssatz aufweist, der durch den Benutzer trainiert werden muß. Dazu wird in einer Lernphase jeder Befehl durch den Benutzer mehrmals wiederholt, damit sich die Spracherkennungseinrichtung auf die Phonetik des Benutzers einstellen kann.

Die sprecherunabhängige Spracherkennung arbeitet ebenfalls mit einem begrenzten, fest definierten Befehlssatz, wobei allerdings das Spracherkennungsverfahren so "intelligent" ist, daß kein Training mehr erforderlich ist.

Dokument D1: = WO-A-94 03 020 offenbart ebenfalls ein Verfahren zur Sprachsteurerung einer Anlage, bei dem in einer Lernphase auf einem auf einem Display jeweils ein Befehl dargestellt wird, der nachgesprachen werden muß. In einem zweiten Durchlauf werden die abgespeicherten Befahle vinfreiet um anschließend in der Sprachsteurerung eingeseht zu werden.

Beiden Verfahren ist gemeinsam, daß nur ein begrenzter, fest vorgegebener Befehlsvorrat erkannt werden kann. Diesen muß der Benutzer in der Regel auswendig lernen. Je größer die Anzahl der Befehle ist, je höhere Anforderungen werden an das Spracherkennungsverfahren und an das Gedächtnis des Benutzers gestellt.

Diese Nachteile der bekannten Spracherkennungsverfahren erschweren die Sprachsteuerung beispielsweise eines Autoradios besonders stark. Bei diesen Geräten ist nämlich die Anzahl der erforderlichen Befehle relativ groß, unter anderem durch die Vielzahl der Sender, auf die ein Autoradio, insbesondere während einer längeren Fahrt, einzustellen ist.

Aufgabe der vorliegenden Erfindung ist es, ein Verfahren zur Sprachsteuerung von Anlagen und Geräten unter Vermeidung der obengenannten Nachteile vorzuschlagen, insbesondere dem Benutzer ein Auswendiglernen vieler Befehle zu ersparen.

Diese Aufgabe wird erfindungsgemäß durch die Merkmale des Anspruchs 1 im kennzeichnenden Teil gelöst.

Das erfindungsgemäße Vehfahren hat einerseits den Vorteil, daß dem Benutzer angezeigt wird welche Befehle bei dem jeweils vorhandenen Betriebszustand der Anlage und des Gerätes eingegeben werden können. Dabei ist nicht nur die Auswahl als solche von Vorteil, sondern auch die Sichtbarmachung der einzelnen Befehle, wodurch der Benutzer gehalten wird, die vorgegebenen Wörter zu verwenden. So wird beispielsweise die versehentliche Benutzung eines für das Spracherkennungssystem nicht erkennbaren Synonyms durch den Benutzer vermieden. Andererseits hat die erfindungsgemäße Einrichtung den Vorteil, daß die Spracherkennungseinrichtung die empfangenen Sprachsignale trotz einer großen Anzahl von insgesamt möglichen Befehlen nur mit jeweils wenigen im Menü dargestellten Befehlen vergleichen muß. Dadurch kann ein einfaches und sicheres Spracherkennungsverfahren gewählt werden.

Eine Weiterbildung des Verfahrens erfindungsgemäßen besteht darin, daß die sprachrelevanten Signale durch Sprachsynthese der jeweils dargestellten Befehle erzeugt und in einem weiteren Speicher abgelegt werden. Dieses hat den Vorteil, daB der Hersteller der Anlagen und Geräte und gegebenenfalls auch der Benutzer bei Änderungen der Befehlsauswahllisten (Menüs) bzw. der einzelnen Befehle neue Befehle lediglich in Form von Text, beispielsweise sogenannten ASCI-Zeichen, eingeben kannZ die dann in die zu vergleichenden sprachrelevanten Signale umgewandelt werden.

Bei dem erfindungsgemäßen Verfahren kann ferner vorgesehen sein, daß der Speicher und der weitere Speicher Analogspeicher sind und daß der Vergleich mit Analogsignalen erfolgt oder daß der Speicher und der weitere Speicher digitale Speicher sind und daß der Vergleich mit digitalen Signalen erfolgt.

Je nach Voraussetzungen im einzelnen kann auch eine Ausführungsform vorteilhafter sein, die darin besteht, daß die zu vergleichenden sprachrelevanten Signale aller insgesamt vorgesehenen Befehle in einem Speicher abgelegt sind und daß der Zugriff auf den Speicher zu Zwecken-des Vergleichs entsprechend den jeweils dargestellten Befehlen gesteuert wird.

Eine weitere vorteilhafte Ausgestaltung des erfindungsgemäßen Verfahrens besteht darin, daß die sprachrelevanten Signale die Grundmodulation beim Sprechen des jeweiligen Befehls darstellen. Hierdurch ist ein einfacher Vergleich der gespeicherten mit den sprachrelevanten Signalen möglich.

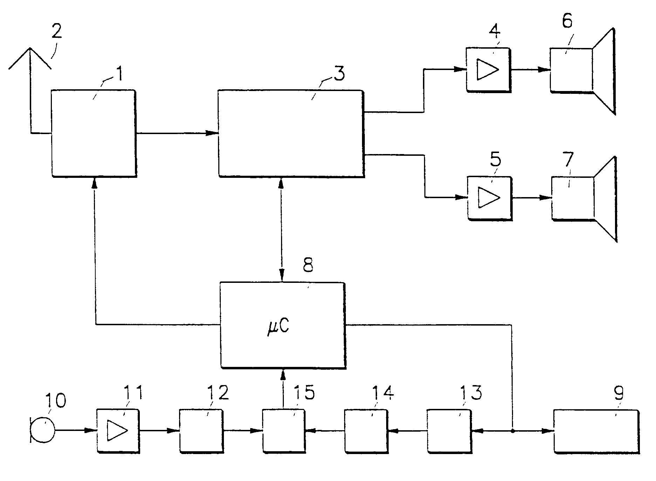

Ein Ausführungsbeispiel der Erfindung ist in der Zeichnung dargestellt und in der nachfolgenden Beschreibung näher erläutert.

Bei dem dargestellten Ausführungsbeispiel wird mit einem erfindungsgemäßen Verfahren ein Autoradio sprachgesteuert, das schematisch durch einen Empfangsteil 1 mit einer Antenne 2, einen Signalverarbeitungsteil 3, zwei Endstufen 4, 5 und Lautsprecher 6, 7 dargestellt ist. Der Signalverarbeitungsteil 3 kann in an sich bekannter Weise beispielsweise einen Stereodecoder, einen Radio-Datensignal-Decoder, einen Verkehrsfunkdecoder sowie Lautstärke- und Klangsteller enthalten.

Das Empfangsteil 1 und das Signalverarbeitungsteil 3 werden von einem Mikrocomputer 8 gesteuert, der von dem Signalverarbeitungsteil 3 auch verschiedene Daten, wie beispielsweise decodierte Radio-Datensignale erhält. Ein Ausgang des Mikrocomputers 8 ist mit einer Anzeigevorrichtung (Display) 9 verbunden, die ein Menü mit den im jeweiligen Betriebszustand des Autoradios ausführbaren Befehlen zeigt. Dieses kann beispielsweise eine Liste von Einstellungen wie "Kassette", "UKW" "Mittelwelle", "Verkehrsfunk" oder eine Auswahl der jweils zu empfangenden Sender sein. Bei bekannten Eingabeeinrichtungen, die nicht sprachgesteuert sind, wird die Einstellung eines der Sender durch einen Druck auf eine Taste, die neben dem Namen des Senders angeordnet ist, bewirkt.

Bei der erfindungsgemäßen Einrichtung zur Sprachsteuerung ist ein Mikrofon 10 vorgesehen, dessen Ausgangssignale über einen Verstärker 11 einem Speicher 12 zugeführt werden. Außer der Anzeigevorrichtung 9 ist an dem Mikrocomputer 8 ein Sprachcodierer 13 angeschlossen, dessen Ausgangssignale synthetische Sprachsignale darstellen und in einen Speicher 14 einschreibbar sind. Verfahren zur Sprachcodierung sind an sich bekannt, beispielsweise durch das Computerprogramm SAY für den Computer Amiga. Die Inhalte der Speicher 12 und des Speichers 14 können in einer Vergleichseinrichtung 15 verglichen werden. Stimmt eines der im Sprachcodierer 13 erzeugten Signale mit dem im Speicher 12 vorhandenen Signal überein - einschließlich eines Toleranzbereichs - wird dem Mikrocomputer 8 gemeldet, welches der sprachrelevanten Signale, das heißt, welcher Befehl aus dem dargestellten Menü, mit dem eingegebenen Befehl übereinstimmt. Die entsprechende Funktion wird dann vom Mikrocomputer 8 ausgeführt.

Danach kann dann gegebenenfalls ein anderes Menü mit Hilfe der Anzeigevorrichtung 9 sichtbar gemacht werden, wobei die im Menü aufgeführten Daten dem Sprachcodierer 13 zugeführt werden, worauf eine neue Spracheingabe möglich ist.

## Patentansprüche

1. Verfahren zur Sprachsteuerung einer Anlage oder eines Gerätes mit Hilfe von den Betrieb der Anlage oder des Gerätes beeinflussenden Befehlen, dadurch gekennzeichnet daß
- bei dem auf einer Anzeigevorrichtung (9) in Abhängigkeit vom jeweiligen Betriebszustand ein Menü mit den in diesem Betriebszustand ausführbaren Befehlen als Teil der insgesamt vorgesehenen Befehle dargestellt wird, wobei eine Eingabe durch Aussprache jeweils eines der dargestellten Befehle erfolgt, daß
- bei dem ferner ein Speicher (12) zur Speicherung von jeweils über ein Mikrofon (10) empfangenen Sprachsignalen oder davon abgeleiteter Signale dient, daß
- bei dem die zu vergleichenden sprachrelevanten Signale aller insgesamt vorgesehenen Befehle in einem Speicher abgelegt sind, da*ß*
- bei dem aber die vom Mikrofon empfangenen oder abgeleitetn und dann gespeicherten Signale nur mit denjenigen sprachrelevanten Signalen verglichen werden, welche den jeweils wenigen im Menü dargestellten Befehlen entsprechen,
- und, daß bei dem derjenige Befehl, bei welchem der Vergleich positiv ausfällt, als ausgewählt angenommen wird.

2. Verfahren nach Anspruch 1, dadurch gekennzeichnet, daß die sprachrelevanten Signale durch Sprachsynthese der jeweils dargestellten Befehle erzeugt und in einem weiteren Speicher (14) abgelegt werden.

3. Verfahren nach Anspruch 2, dadurch gekennzeichnet, daß der Speicher (12) zur Speicherung von jeweils über ein Mikrofon (10) empfangenen Sprachsignalen oder davon abgeleiteter Signale und der weitere Speicher (14) Analogspeicher sind und daß der Vergleich mit Analogsignalen erfolgt.

4. Verfahren nach Anspruch 2, dadurch gekennzeichnet, daß der Speicher (12) zur Speicherung von jeweils über ein Mikrofon (10) empfangenen Sprachsignalen oder davon abgeleiteter Signale und der weitere Speicher (14) digitale Speicher sind und daß der Vergleich mit digitalen Signalen erfolgt.

5. Verfahren nach einem der Ansprüche 1 bis 4, dadurch gekennzeichnet, daß die sprachrelevanten Signale die Grundmodulation beim Sprechen des jeweiligen Befehls darstellen.

## Claims

1. Method for voice control of an installation or of an appliance using commands which influence the operation of the installation or of the appliance, characterized in that
- a display apparatus (9) shows, on the basis of the respective operating state, a menu containing the commands which can be executed in this operating state as a portion of all the commands provided, input being effected by speaking a particular one of the commands shown, in that
- in addition, a memory (12) is used to store respective voice signals received via a microphone (10), or signals derived therefrom, in that
- the voice-related signals for all of the commands provided in total, which signals are to be compared, are stored in a memory, in that
- the signals received from the microphone or derived and then stored are compared, however, only with those voice-related signals which correspond to the respective small number of commands shown in the menu,
- and in that the command assumed to have been selected is that command for which the result of the comparison is positive.

2. Method according to Claim 1, characterized in that the voice-related signals are produced by voice synthesis for the respective commands shown and are stored in a further memory (14).

3. Method according to Claim 2, characterized in that the memory (12) for storing respective voice signals received via a microphone (10), or signals derived therefrom, and the further memory (14) are analogue memories, and in that the comparison is effected using analogue signals.

4. Method according to Claim 2, characterized in that the memory (12) for storing respective voice signals received via a microphone (10), or signals derived therefrom, and the further memory (14) are digital memories, and in that the comparison is effected using digital signals.

5. Method according to one of Claims 1 to 4, characterized in that the voice-related signals represent the basic modulation when the respective command is spoken.

## Revendications

1. Procédé de commande vocale d'une installation ou d'un appareil à l'aide d'ordres exerçant une action sur le fonctionnement de l'installation ou de l'appareil,
caractérisé en ce que
• sur un appareil indicateur (9), en fonction de chaque état de fonctionnement, est affiché un menu présentant, en tant que partie de l'ensemble des ordres prévus, les ordres à exécuter dans cet état de fonctionnement, une entrée ayant lieu par prononciation de chacun des ordres représentés,
• de plus, une mémoire (12) sert à stocker chacun des signaux vocaux reçus par l'intermédiaire d'un microphone (10) ou de signaux en dérivant,
• les signaux significatifs de la parole servant de comparaison et correspondant à l'ensemble des ordres prévus sont déposés dans une mémoire,
• les signaux reçus par le microphone ou en dérivant et alors mis en mémoire sont comparés avec seulement les signaux significatifs de la parole qui correspondent à chacun des ordres, peu nombreux, figurant au menu, et
• l'ordre pour lequel la comparaison se révèle positive, est sélectionné.

2. Procédé selon la revendication 1,
caractérisé en ce que
les signaux significatifs de la parole sont produits par synthèse vocale de chacun des ordres présentés, et sont déposés dans une seconde mémoire (14).

3. Procédé selon la revendication 2,
caractérisé en ce que
la mémoire (12) servant à stocker les signaux vocaux recueillis par un microphone (10) ou des signaux dérivés de ceux-ci, ainsi que la seconde mémoire (14) sont des mémoires analogiques et la comparaison s'effectue entre les signaux analogiques.

4. Procédé selon la revendication 2,
caractérisé en ce que
la mémoire (12) servant à stocker les signaux vocaux recueillis par un microphone (10) ou des signaux dérivés de ceux-ci, ainsi que la seconde mémoire (14) sont des mémoires numériques et la comparaison s'effectue entre les signaux numériques.

5. Procédé selon une quelconque des revendications 1 à 4,
caractérisé en ce que
les signaux significatifs de la parole représentent la modulation de base lorsqu'est prononcé chaque ordre.
